# EUROPÄISCHE PATENTANMELDUNG

(11) **EP 1 273 217 A1**
(43) Veröffentlichungstag der Anmeldung: **08.01.2003**
(21) Anmeldenummer: 01202542.5
(22) Anmeldetag: 03.07.2001
(51) Int. Cl.: A01B 71/06, A01B 51/04

(54) **Landmaschine**

(71) Anmelder: Lely Enterprises AG, 6300 ZUG (CH)
(72) Erfinder: Arnold, Martin, 38275 Steinlah (DE)
(74) Vertreter: Corten, Maurice Jean F.M.

(57) **Zusammenfassung**

Die Erfindung betrifft eine an einen Schlepper (3) ankuppelbare und vom Schlepper (3) antreibbare Landmaschine (1) mit wenigstens einem mit elektrischer Energie versorgten Verbraucher (10, 12). Um die Betriebssicherheit elektrischer Verbraucher (10, 12) der Landmaschine (1) trotz steigender Anforderungen sicherzustellen, wird erfindungsgemäß vorgeschlagen, daß die Landmaschine (1) zur Stromversorgung ein eigenes Bordnetz (17) mit wenigstens einem eigenen Energieerzeuger (13) und/oder Energiespeicher (15) aufweist.

## Beschreibung

Die Erfindung betrifft eine an einen Schlepper ankuppelbare und vom Schlepper antreibbare Landmaschine mit wenigstens einem mit elektrischer Energie versorgten Verbraucher.

Die Anwendung der Elektronik verbreitet sich bei Landmaschinen in stark zunehmendem Maße. Schon jetzt sind beispielsweise bei Ballenpressen bis zu zwanzig Verbraucher zu versorgen. Verbraucher sind beispielsweise Steuer-, Regelund / oder Bediengeräte, die mit Sensoren und Aktoren in Wirkverbindung stehen und zur Dichteregelung dienen oder auch Stellmotoren für Bewegungsvorgänge, wie beispielsweise die Bindung bei Rundballenpressen oder elektrisch angetriebene Gebläse für die Reinigung der Knüpfapparate bei Quaderballenpressen.

Bisher erfolgt die elektronische Energieversorgung vom Schlepper aus, in dem die Versorgungsleitungen an die 12 Volt Schlepperbatterie oder an die 25 Ampere Dauerstromsteckdose des Schleppers angeschlossen werden.

Nachteilig ist einerseits der Spannungsabfall durch zahlreiche und lange Verbindungsleitungen zwischen Schlepper und Verbraucher der Landmaschine. Andererseits führt aber auch die gleichzeitige Betätigung mehrerer Stromverbraucher auf dem Schlepper dazu, daß die Verbraucher der Landmaschine nicht oder nicht mehr einwandfrei (zu langsam) arbeiten. Darüber hinaus führt der gleichzeitige Betrieb mehrerer Verbraucher der Landmaschine zu Überlastungen der Schlepperstromquelle, so daß die Sicherungen ansprechen. Steuer- / Regelgeräte weisen bereits eigene Regler auf, die einen Spannungsabfall berücksichtigen und die Spannung auf z.B. 8 Volt herunterregeln, d.h. die Steuer- und Regelgeräte arbeiten auch noch mit dieser Spannung einwandfrei. Abhilfe könnte man auch mit dickeren Leitungsquerschnitten schaffen, jedoch würden die auf 25 A Dauerstrom ausgelegten Schlepperleitungen wieder zu einem erheblichen Spannungsabfall führen.

Künftig werden an Landmaschinen, insbesondere Ballenpressen heute noch mechanisch oder hydraulisch betätigte Verbraucher durch elektrische Verbraucher ersetzt.

Der Erfindung liegt die Aufgabe zugrunde, die Betriebssicherheit elektrischer Verbraucher einer mit einem Schlepper verbundenen Landmaschine trotz steigender Anforderungen sicherzustellen.

Diese Aufgabe wird erfindungsgemäß dadurch gelöst, daß die Landmaschine zur Stromversorgung ein eigenes Bordnetz mit wenigstens einem eigenen Energieerzeuger und/oder Energiespeicher aufweist.

Hierdurch ergeben sich folgende Vorteile:
- verbrauchergerechte Auslegung der Stromstärke, Leitungsquerschnitte und Sicherungen, unabhängig vom Schlepperbordnetz,
- höhere Anzahl von Verbrauchern möglich,
- zuverlässiger gleichzeitiger Betrieb mehrerer Verbraucher ohne Rückwirkung auf den oder vom Schlepper,
- minimale Längen von Verbindungsleitungen,
- keine Spannungsabfälle oder Störungen durch Schleppersteckdose,
- Betrieb auch mit Schleppern möglich, die z.B. 24 oder 42 Volt Anlagen benutzen,
- keine Rückwirkung der Anschlußkonstellation des Schleppers auf die Landmaschine. Da manche Schlepperhersteller (England) die Plusleitung auf Masse gelegt haben, ist es in diesem Fall erforderlich, die gesamte Elektrik vom Chassis (Masse) isoliert anzuordnen, was aufwendig ist.
- Da das Bordnetz auch einen Energiespeicher aufweist, können Steuervorgänge auch bei Stillstand der Arbeitsorgane durchgeführt werden.
- Niedrigenergieverbraucher können auch ausschließlich durch Batterie versorgt werden.

Weitere Merkmale und Vorteile der Erfindung ergeben sich aus den übrigen Unteransprüchen und aus der nachfolgenden Beschreibung eines bevorzugten Ausführungsbeispieles anhand der Zeichnung:
Es zeigt:
- Fig.1: eine Schlepper-Rundballenpressen-Kombination mit einer erfindungsgemäßen eigenen Stromversorgung und
- Fig.2: einen Bordnetzschaltplan der Rundballenpresse gemäß Fig.1 mit einem Bedien- / Steuergerät mit kleiner Leistungsaufnahme und einem Bindeantriebsmotor mit größerer Leistungsaufnahme.

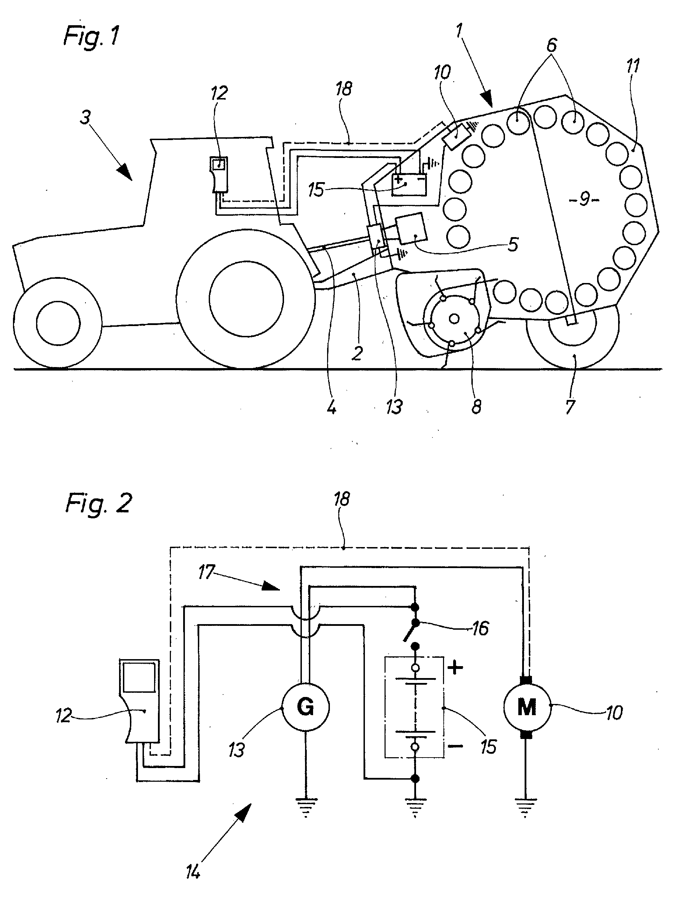

Die in Figur 1, stellvertretend für eine Landmaschine dargestellte Rundballenpresse 1 ist fahrbar und wird mit einer Zugdeichsel 2 an einen Schlepper 3 angeschlossen. Der Schlepper 3 zieht die Rundballenpresse 1 und stellt die für die Funktionskomponenten erforderliche Energie zur Verfügung, d.h. beispielsweise Drehmoment von einer Zapfwelle am Schlepper 3 über eine Gelenkwelle 4 und ein Hauptgetriebe 5 auf Preßwalzen 6 sowie hydraulischen Druck von einer Schlepperhydropumpe über Hydraulikleitungen.

Die Rundballenpresse 1 ist auf einem Fahrwerk 7 aufgebaut und besitzt an ihrem in Fahrtrichtung vorderen Ende eine höhenverstellbare Aufsammelvorrichtung 8, die das vom Boden aufgenommene Halmgut in eine Preßkammer 9 fördert, in der die Preßelemente 6 einen nicht dargestellten Ballen formen. Der fertiggepreßte Ballen wird mittels einer Bindeeinrichtung umschnürt, von der nur ein Elektromotor 10 gezeigt ist. Nach Umschnürung wird der fertige Ballen nach Öffnen einer Heckklappe 11 nach hinten ausgestoßen.

Neu ist, daß die elektrische Energie für die Verbraucher, z.B. Steuer und / oder Bediengerät 12 und Elektromotor 10 auf der Rundballenpresse 1 nicht mehr über das Schlepperbordnetz zur Verfügung gestellt wird, sondern durch einen eigenen auf der Rundballenpresse 1 angeordneten Drehstromgenerator 13 erzeugt wird, der vor dem Hauptgetriebe 5 der Rundballenpresse 1 angeordnet ist und mechanisch über die Gelenkwelle 4 vom Schlepper 3 angetrieben wird. Der ortsfest angeordnete Drehstromgenerator 13 ist beispielsweise über einen nicht dargestellten Riementrieb mit Übersetzung mit der Eingangswelle des Hauptgetriebes 5 verbunden.

Ein Bordnetz 14 der Rundballenpresse 1 ist beispielhaft in Figur 2 dargestellt. Es besteht aus dem Drehstromgenerator 13, einer Batterie 15, einem Batteriehauptschalter 16 als Not-Aus-Sicherheitsschalter, dem Steuer- und / oder Bediengerät 12 als Verbraucher mit niedriger Leistung und dem Elektromotor 10 für den Antrieb der Bindevorrichtung sowie einer Verkabelung 17, wobei in üblicher Weise die Minusleitung an das Pressengehäuse (Masse) gelegt ist. Der Elektromotor 10 ist direkt an die Batterie 15 angeschlossen, während das Steuer- und / oder Bediengerät 12 mit der Batterie 15 verbunden ist. Zur Steuerung der Bewegungsvorgänge des Elektromotors 10 dient eine CAN-BUS Leitung 18 vom Steuer- und Bediengerät 12.

Die Wirkungsweise der erfindungsgemäßen Rundballenpresse 1 ist wie folgt:

Während des Betriebes treibt die Zapfwelle des Schleppers 3 die Gelenkwelle 4 und damit den Drehstromgenerator 13 an. Durch entsprechende Betätigung des Batteriehauptschalters 16 und des Bedien- und Steuergerätes 12 wird der eingeschaltete Verbraucher 10, 12 bei geschlossenem Stromkreis über das Bordnetz 14 der Ballenpresse 1 mit Strom versorgt. Die gemäß StVZO vorgeschriebene Beleuchtung der Rundballenpresse 1 erhält ihre Energieversorgung und Signale wie bisher vom Schlepper 3.

Anstelle der Rundballenpresse können auch Kombinationen von Rundballenpressen mit Einrichtungen zum Umwickeln des Ballens mit Folie oder auch Quaderballenpressen sowie, Düngerstreuer, Mähwerke, Ladewagen und andere Landmaschinen mit einer eigenen elektrischen Energieversorgung erfindungsgemäß ausgestaltet sein. Bei Landmaschinen, deren Verbraucher, z.B. ein Steuer- und/oder Regelgerät, nur eine geringe Leistungsaufnahme haben, kann es auch ausreichend sein, nur einen Energiespeicher zu verwenden, der die Energieversorgung für mindestens 24 Stunden darstellt. Alternativ kann es auch zweckmäßig sein, nur die Verbraucher mit hoher Leistungsaufnahme an die eigene Energieversorgungsanlage der Landmaschine anzuschließen und die Verbraucher mit niedriger Leistungsaufnahme vom Schlepperbordnetz aus zu betreiben.

## Patentansprüche

1. An einen Schlepper (3) ankuppelbare und vom Schlepper (3) antreibbare Landmaschine (1) mit wenigstens einem mit elektrischer Energie versorgten Verbraucher (10,12), **dadurch gekennzeichnet, daß** die Landmaschine (1) zur Stromversorgung ein eigenes Bordnetz (17) mit wenigstens einem eigenen Energieerzeuger (13) und/oder Energiespeicher (15) aufweist.

2. Landmaschine nach Anspruch 1, **dadurch gekennzeichnet, daß** der Antrieb des Energieerzeugers (13) direkt oder indirekt von einer Hauptantriebswelle (4) der Landmaschine (1) abgeleitet wird.

3. Landmaschine nach Anspruch 2, **dadurch gekennzeichnet, daß** zwischen Hauptantriebswelle (4) und Energieerzeuger (13) eine Übersetzung vorgesehen ist.

4. Landmaschine nach Anspruch 2 oder 3, **dadurch gekennzeichnet, daß** der Energieerzeuger (13) von einer Eingangswelle des Hauptgetriebes (5) der Landmaschine (1) angetrieben wird.

5. Landmaschine nach Anspruch 4, **dadurch gekennzeichnet, daß** der Antrieb des Energieerzeugers (13) durch einen Riemenantrieb erfolgt.

6. Landmaschine nach einem oder mehreren der vorhergehenden Ansprüche, **dadurch gekennzeichnet, daß** der Energieerzeuger (13) ein Drehstromgenerator ist.

7. Landmaschine nach einem oder mehreren der vorhergehenden Ansprüche, **dadurch gekennzeichnet, daß** der Energiespeicher (15) eine ortsfest auf der Landmaschine (1) angeordnete Batterie ist, wobei zwischen Generator (13), Batterie (15) und Verbrauchern (10,12) eine Verkabelung (17) mit wenigstens einem Not-Aus-Schalter (16) vorgesehen ist, der die Stromzufuhr zu allen Verbrauchern als Sicherheitselement unterbricht.

8. Landmaschine nach einem oder mehreren der vorhergehenden Ansprüche, **dadurch gekennzeichnet, daß** die Landmaschine eine Ballenpresse (1) ist, welche mit einer Einrichtung zum Umwickeln des ausgeworfenen Ballens mit Folie kombinierbar ist.

9. Landmaschine nach einem oder mehreren der vorhergehenden Ansprüche, **dadurch gekennzeichnet, daß** die Beleuchtung der Landmaschine (1) durch das Bordnetz des Schleppers (3) mit Energie versorgt und betrieben wird.

10. Landmaschine nach Anspruch 1, **gekennzeichnet durch** elektrische Verbraucher, welche ausschließlich **durch** einen Energiespeicher betreibbar sind.
